# EUROPEAN PATENT APPLICATION

(11) **EP 4 737 979 A1**
(43) Date of publication of application: **06.05.2026**
(21) Application number: 25210568.9
(22) Date of filing: 22.10.2025
(51) Int. Cl.: G02B 23/24, A61B 1/00, G01N 21/954, H04N 23/50

(54) **PIPELINE ENDOSCOPE PROBE**

(30) Priority: 31.10.2024 US 202418932620; 13.10.2025 CN 202522166749 U
(71) Applicant: Shenzhen Andelian Technology Co., Ltd., Shenzhen 518000 (CN)
(72) Inventor: Zhong, Qianhua, Shenzhen, 518000 (CN)
(74) Representative: Metida

(57) **Abstract**

A pipeline endoscopic probe includes a shell (10) having an accommodating chamber (11) with an image acquisition window (12);an image acquisition device (30) positioned within the accommodating chamber (11) and oriented toward the image acquisition window (12);a driving/adjusting device connected to the is used to adjust the image acquisition angle of the image acquisition device (30), ensuring that the image from the image acquisition device (30) always remains upright;a first control board (51) fixedly installed inside the accommodating chamber (11); and a rotating electrical connector (40) arranged inside the accommodating chamber (11). The rotating electrical connector (40) includes a fixing component (401) and a rotatable component (402), the rotatable component (402) is rotatable relative to the fixing component (401) and follows a rotation of the driving/adjusting device; and the image acquisition device (30) is electrically connected to the rotatable component (402).

## Description

### TECHNICAL FIELD

The present disclosure relates to the technical field of pipeline endoscopes, and in particular, to a pipeline endoscope probe.

### BACKGROUND

As a pipeline inspection device, the pipe endoscope enables people to visually inspect the interior of pipelines without disassembly or entry, it facilitates maintenance, daily upkeep, and troubleshooting operations. Beyond its use in high-temperature, toxic, or radioactive environments where direct human observation is impossible, it is also employed for video inspection of ventilation ducts, air conditioning pipelines, water pipes, industrial pipelines, internal welds, corrosion, blockages, irregularities, and foreign objects, this significantly enhances convenience in work and daily life.

Currently, when existing pipeline endoscopes are in use, the probe often rotates inside the pipe along with the guide wire, during this process, the observed images are flipped, causing inconvenience for users to inspect the pipe's interior. Additionally, since the images appear reversed, it becomes difficult to accurately determine the specific locations of welds, corrosion, blockages, discrepancies, or foreign objects, this prevents users from intuitively understanding the pipe's internal conditions and affects their judgment.

To address this, the present invention provides a pipeline endoscope probe that effectively resolves the aforementioned issues, it features a simple structure and can automatically adjust the orientation of the lens, thereby modifying the image orientation, making it user-friendly.

### SUMMARY

In order to overcome the shortcomings of existing technology, the present invention provides a pipeline endoscope probe and a pipeline endoscope assembly, which have a simple structure, can adjust the orientation of the image, and are convenient for users to use.

Apipeline endoscope probe includes a shell, an image acquisition device, a driving/adjusting device, a first control board, a first control board and a rotating electrical connector. The shell is provided with an accommodating chamber with an image acquisition window in communication with the accommodating chamber. The image acquisition device is positioned within the accommodating chamber and oriented toward the image acquisition window. The driving/adjusting device is used to adjust the image acquisition angle of the image acquisition device, ensuring that an image displayed on a display of a detection system connected to the image acquisition device remains upright. The first control board is fixedly installed inside the accommodating chamber. The rotating electrical connector is arranged inside the accommodating chamber, and the rotating electrical connector includes a fixing component and a rotatable component electrically connected to the fixing component. The rotatable component is capable of rotating relative to the fixing component. The image acquisition device is electrically connected to the rotatable component through a first electrical connection line, and the fixing component is electrically connected to the first control board through a second connection line. When the driving/adjusting device rotates, the rotatable component follows the rotation of the driving/adjusting device, and the fixing component maintains its original state relative to the rotatable component.

A pipeline detection system includes a cable, and a display displaying images detected by a pipeline endoscope probe; one end of the cable is electrically connected to the display, and the other end of the cable is electrically connected to a first connector of the pipeline endoscope probe, thereby the cable is electrically connected with the pipeline endoscope probe and capable of transmitting the detected image to the display.

A pipeline endoscope assembly includes the pipeline endoscope probe and the pipeline detection system featured above.

The beneficial effects of the present invention are as follows: through the above structure, when in use, the driving/adjusting device is used to adjust the image acquisition angle of the image acquisition device, so that the image displayed by the display according to the image signal always remains forward, preventing the image acquisition device from rotating with the pipeline endoscope probe when the pipeline endoscope probe is inserted into the pipeline, maintaining the stability of the image acquired by the image acquisition device, allowing users to better see the situation inside the pipeline based on the information collected by the image acquisition device, rotating the electrical connector to prevent wire entanglement, enabling the driving/adjusting device to move better, improving the activity stability of the driving/adjusting device, and matching the detection system application to be more convenient for users to use, improving the user's experience.

### BRIEF DESCRIPTION OF THE DRAWINGS

In order to explain the technical solutions of the embodiments of the present disclosure more clearly, the following will briefly introduce the accompanying drawings used in the embodiments. Apparently, the drawings in the following description are only some embodiments of the present disclosure. Those of ordinary skill in the art can obtain other drawings based on these drawings without creative work.
FIG. 1 is a schematic view of a pipeline endoscope probe according to an embodiment of the present disclosure.
FIG. 2 is an exploded view of the pipeline endoscope probe of FIG. 1.
FIG. 3 is an enlarged view of the H part of FIG. 2.
FIG. 4 is another exploded view of the pipeline endoscope probe of FIG. 1.
FIG. 5 is an enlarged view of the R part of FIG. 4.
FIG. 6 is a partially exploded view of the pipeline endoscope probe of FIG. 6.
FIG. 7 is a partially exploded view of the rotating electrical connector and the eccentric component.
FIG. 8 is a partially cross sectional view of the pipeline endoscope probe of FIG. 1.
FIG. 9 is a partially enlarged view of the B part of FIG. 8.
FIG. 10 is a partially enlarged view of the C part of FIG. 8.
FIG. 11 is a schematic view showing the connection between the conductive plate and the cable.
FIG. 12 shows first electrodes arranged on a first surface of the circuit substrate, and second electrodes arranged on a second surface of the circuit substrate away from the first surface.
FIG. 13 is a schematic view of the pipeline endoscope probe according to an alternative implementation.
FIG. 14 is an exploded view of FIG. 13.
FIG. 15 is another exploded view of FIG. 12.
FIG. 16 is an exploded view of the rotating electrical connector.
FIG. 17 is an exploded view of the fixing component of the rotating electrical connector of FIG. 16.
FIG. 18 is a schematic view of the detection system according to an embodiment of the present disclosure.
FIG. 19 is another schematic view of the detection system of FIG. 18.
FIG. 20 is a frame diagram showing a pipeline endoscope assembly according to a first embodiment.
FIG. 21 is a frame diagram showing a pipeline endoscope assembly according to a second embodiment.
FIG. 22 is a schematic circuit block diagram of the pipeline endoscope probe of FIG. 1.
FIG. 23 is a circuit diagram of the power module of the pipeline endoscope probe of FIG. 12.
FIG. 24 is a circuit diagram of the storage module of the pipeline endoscope probe of FIG. 12.
FIG. 25 is a circuit diagram of the flash module of the pipeline endoscope probe of FIG. 12.
FIG. 26 is a circuit diagram of the switch control module of the pipeline endoscope probe of FIG. 12.
FIG. 27 is a circuit diagram of the infrared illumination module of the pipeline endoscope probe of FIG. 12.
FIG. 28 is a circuit diagram of the infrared control module of the pipeline endoscope probe of FIG. 12.
FIG. 29 is a circuit diagram of the image module of the pipeline endoscope probe of FIG. 12.
FIG. 30 is a partially exploded view of the pipeline endoscope probe according to a modified embodiment.

### DETAILED DESCRIPTION OF THE EMBODIMENTS

The accompanying drawings in the embodiment of the present disclosure are combined, The technical scheme in the embodiment of the present disclosure is clearly and completely described, Obviously, the described embodiment is only a part of the embodiment of the present disclosure, but not all embodiments are based on the embodiment of the present disclosure, and all other embodiments obtained by ordinary technicians in the field on the premise of not doing creative work belong to the protection range of the present disclosure.

In order to make the above objectives, features, and advantages of the present application more obvious and understandable, the following will provide further detailed explanations of the present application in conjunction with the accompanying drawings and specific implementation methods.

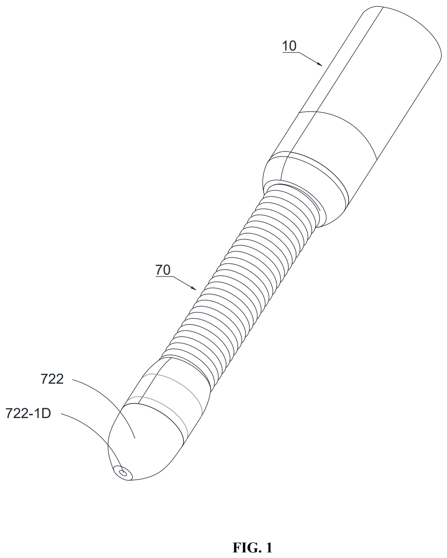

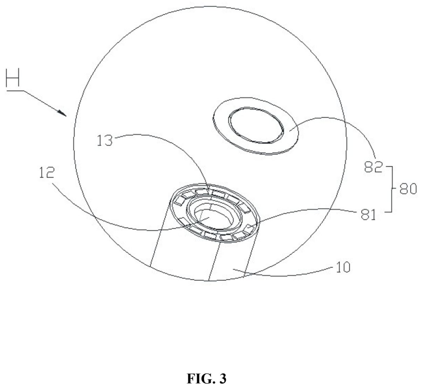

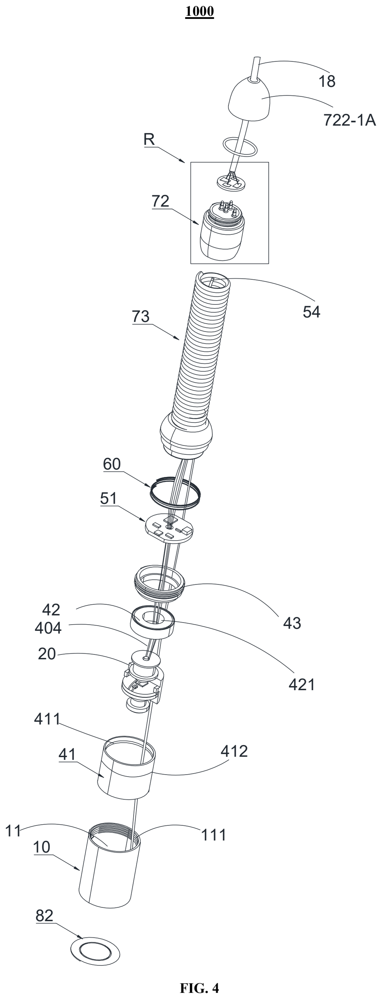

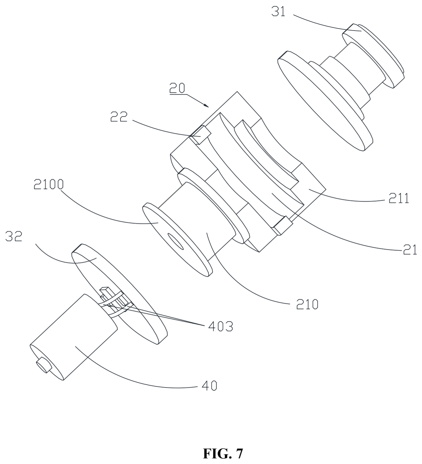

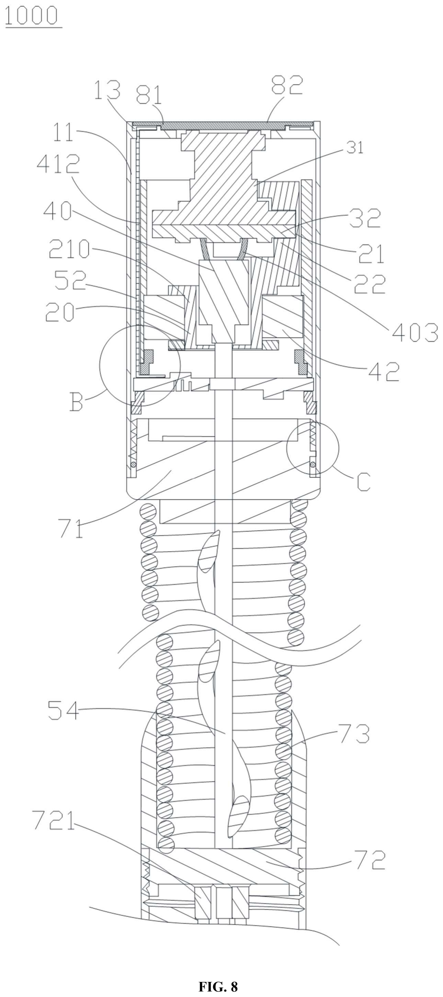

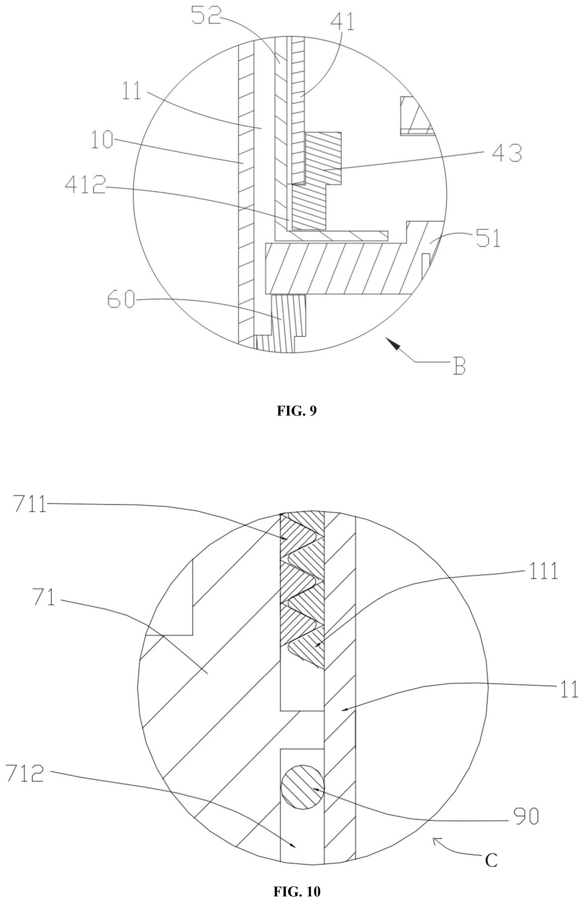

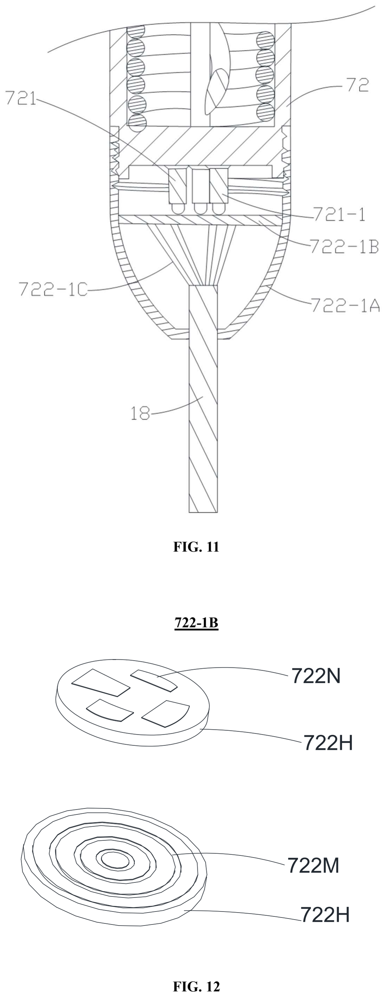

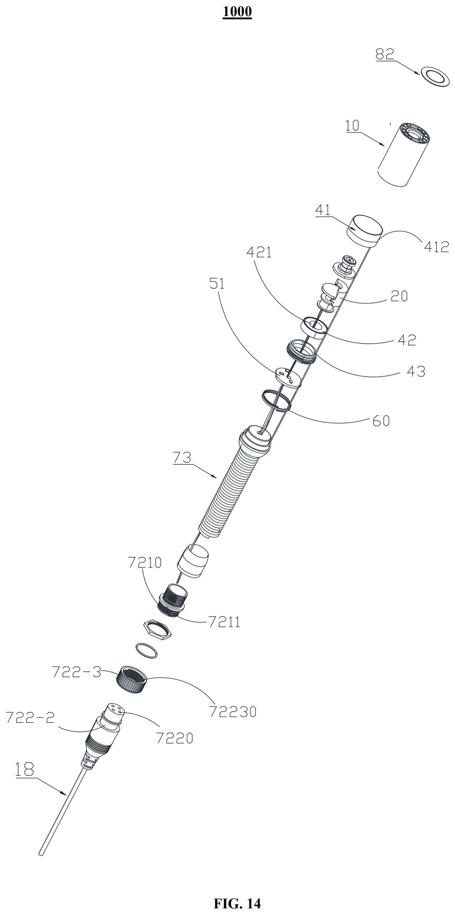

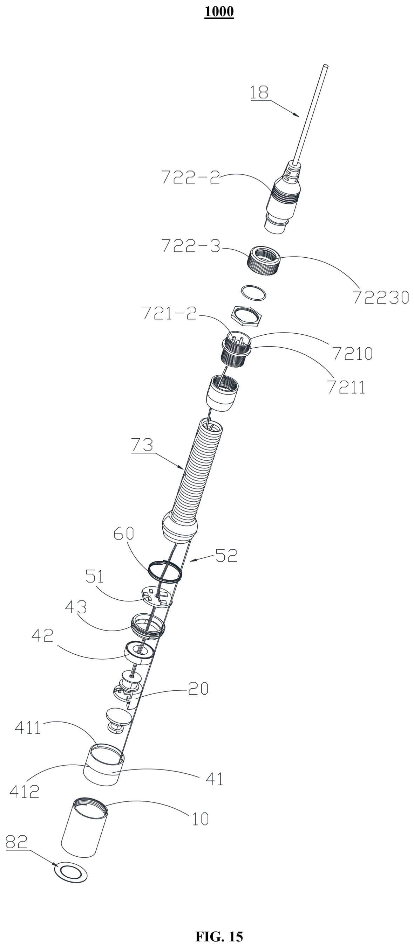

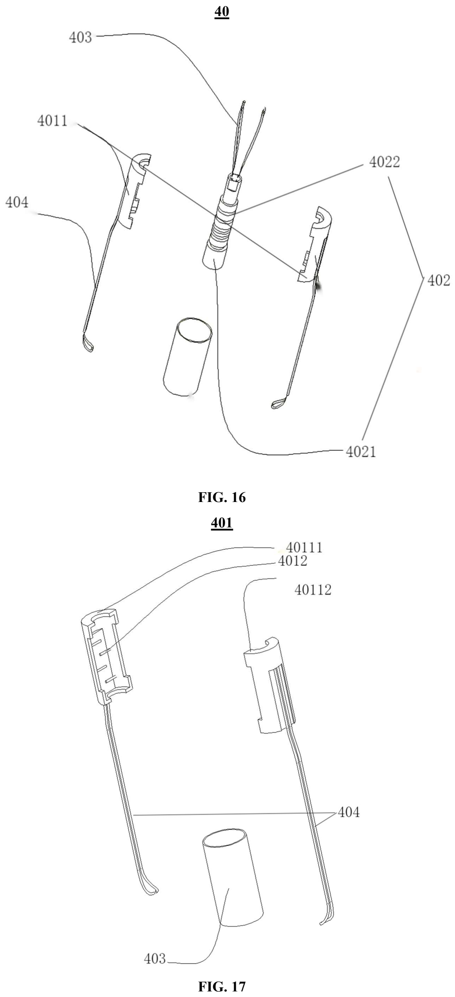

Referring to figures 1 to 17, a pipeline endoscope probe 1000 includes a shell 10, an image acquisition device 30, a driving/adjusting device, a first control board 51, a first control board 51 and a rotating electrical connector 40.

The shell 10 is provided with an accommodating chamber 11 and an image acquisition window 12 in communication with the accommodating chamber 11, and the image acquisition window 12 can be a through hole.

The image acquisition device 30 is positioned within the accommodating chamber 11 and oriented toward the image acquisition window 12.

The driving/adjusting device (introduced below) is used to adjust the image acquisition angle of the image acquisition device 30, ensuring that an image displayed on a display 15 of a detection system 2000 connected to the image acquisition device 30 always remains upright.

The first control board 51 is fixedly installed inside the accommodating chamber 11.The first control board 51 is the main control board, mainly connected to the image acquisition device 30 and the detection system 2000. If lighting, sensors, or electrical components that are convenient for users to collect information inside the pipeline need to be set up, they can be set up by electrically connecting the first control board 51, laying the foundation for adding electrical components in the later stage.

The rotating electrical connector 40 is arranged inside the accommodating chamber 11. The rotating electrical connector 40 includes a fixing component 401 and a rotatable component 402 electrically connected to the fixing component 401. The rotatable component 402 can rotate relative to the fixing component 401. The image acquisition device 30 is electrically connected to the rotatable component 402 through a first electrical connection line 403, and the fixing component 401 is electrically connected to the first control board 51 through a second connection line 404. When the driving/adjusting device rotates, the rotatable component 402 can follow the rotation of the driving/adjusting device, and the fixing component 401 can maintain its original state relative to the rotatable component 402.

In this embodiment, the driving/adjusting device is used to adjust the image acquisition angle of the image acquisition device, so that the image displayed by the display according to the image signal always remains upright, preventing the image acquisition device from rotating with the pipeline endoscope probe when it is inserted into the pipeline, maintaining the stability of the image acquired by the image acquisition device, and allowing users to better understand the situation inside the pipeline based on the information collected by the image acquisition device. The rotating electrical connector prevents the entanglement of the first electrical connection line, allowing the driving/adjusting device to move better. The fixing component 401 can maintain its original state relative to the first control board 51, improving the activity stability of the driving/adjusting device and enhancing the user's experience.

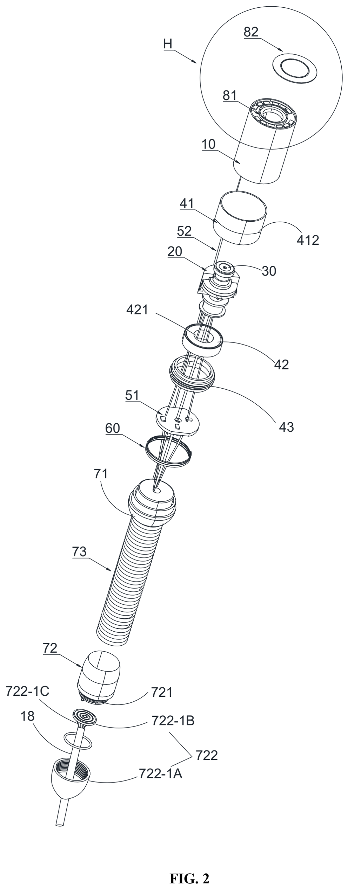

An alternative implementation of the above structure can be as follows: the first control board 51 can be omitted, and the image acquisition device 30 can be directly connected to the detection system 2000 through the second connection line 404 led out by the rotating electrical connector 40. Components that require additional electrical connections in the later stage can also be directly connected to the detection system 2000 through electrical connection lines. Of course, electrical connectors can be set between the detection systems 2000, and the electrical connectors can be divided into two parts, one part is fixedly connected to the second connection line 404, and the other part is fixedly connected to the electrical connection line of the detection system 2000, such detachable settings of the two parts of the electrical connectors make it easier for users to store the detection system 2000 and the image acquisition device 30 separately. The specific structure of the electrical connectors can refer to FIG. 2, FIG. 3, FIG. 4, FIG. 5, FIG. 12, FIG. 13, FIG. 14 and 15.

In this embodiment, the driving/adjusting device comprises an eccentric component 20, which is rotatably arranged in the accommodating chamber 11. The image acquisition device 30 is fixedly connected to the eccentric component 20, and is coaxially arranged with the eccentric component 20, and rotates around the axis of the image acquisition device 30 under the action of the eccentric component 20.

By setting the above structure, when in use, the pipeline endoscope probe is inserted into the pipeline, and the eccentric component 20 rotates under the action of gravity, thereby driving the image acquisition device 30 to rotate, so that the angle of view of the lens of the image acquisition device 30 is always forward, preventing the image acquisition device 30 from rotating with the pipeline endoscope probe when the pipeline endoscope probe is inserted into the pipeline, maintaining the stability of the images collected by the image acquisition device 30, and allowing users to better understand the situation inside the pipeline based on the information collected by the image acquisition device 30.

In this embodiment, the eccentric component 20 is provided with a first mounting groove 21 and a second mounting groove 201. The first mounting groove 21 is located near the image acquisition window 12, and at least a portion of the image acquisition device 30 is inserted into the first mounting groove 21 to be coaxial with the eccentric component 20. The second mounting groove 201 is located away from the image acquisition window 12, the rotating electrical connector 40 is installed in the second mounting groove 201, and the fixing component 401 can rotate relative to the eccentric component 20. By setting the above structure, the image acquisition device 30 can be inserted into the first mounting groove 21, on the one hand, it can make the image acquisition device 30 more stably connected to the eccentric component 20, and on the other hand, it can also be coaxially arranged with the eccentric component 20, when the image acquisition device 30 rotates with the eccentric component 20, it is smoother. Since the image acquisition device 30 is connected to the rotating electrical connector 40 with a wire, sothe second mounting groove 201 is used to facilitate the installation of the rotating electrical connector 40, without the need for wire disconnection, saving installation processes. Furthermore, the eccentric component 20 is equipped with a connecting block 22, and the first mounting groove 21 and the second mounting groove 201 are respectively arranged on both sides of the connecting block 22, and the connecting block 22 is used for supporting connecting component that connects the image acquisition device 30. By using the connecting block 22, the image acquisition device 30 can be further stably connected to the eccentric component 20 and the rotating electrical connector 40, preventing the image acquisition device 30 from detaching from the first mounting groove 21 and improving the stability of the product.

In this embodiment, the image acquisition device 30 includes a lens 31 and a second control board 32. The lens 31 is used to capture images, and the second control board 32 receives the images captured by the lens 31,and imaging elements on the second control board 32 convert images into signals, which can effectively transmit signals.

In this embodiment, a housing 41 and a bearing 42 are further included. The housing 41 is arranged in the accommodating chamber 11, the bearing 42 is fixedly inserted into the housing 41, and the eccentric component 20 is rotatably inserted into a bearing hole 421 of the bearing 42. By setting the above structure, the bearing 42 can make the eccentric component 20 rotate more smoothly around the rotation axis, thereby driving the image acquisition device 30 to rotate synchronously, making the product more sensitive. When the pipeline endoscope probe is turned over, the image acquisition device 30 can rotate quickly and flexibly under the action of gravity, so that the images collected by the image acquisition device 30 are always facing up, making it easier for users to judge the situation inside the pipeline based on the images collected by the image acquisition device 30. The housing 41 can better protect the image acquisition device 30 and the eccentric component 20, and the housing 41, image acquisition device 30, and eccentric component 20 form a whole, which is also convenient for product assembly and improves product production efficiency.

In this embodiment, the eccentric component 20 further includes a connecting tube 210 and an installation base 211. The connecting tube 210 is fixedly connected to the side of the installation base 211 away from the image acquisition window 12. The first installation groove 21 is arranged on the installation base 211, and the second mounting groove 201 is the channel of the connecting tube 210. The connecting tube 210 is rotatably inserted into the bearing hole 421 of the bearing 42, and the rotating electrical connector 40 is installed in the channel of the connecting tube 210, this structure can support the bearing 42, the image acquisition device 30, and the rotating electrical connector 40. The eccentric component 20 not only ensures the communication connection of the image acquisition device 30, allowing the image displayed on monitor 15 always remains in the upright direction, and a rotating electrical connector 40 is also installed. The eccentric component is also fixed in the accommodating chamber in a rotatable manner, the structural setting of the eccentric component is not only simple, but also convenient for the installation of other parts. The two ends of the connecting tube 210 are equipped with limiting portion 2100 that limit the movement of the bearing 42 towards the two ends of the connecting tube 210, making the eccentric component 20 more stable when rotating relative to the bearing 42.

In this embodiment, a first fixing member 43 is also included, which is connected to one end of the housing 41 near the bearing 42. The first fixing member 43 is used to fix the bearing 42 inside the housing 41. By setting the above structure, the first fixing component 43 can further fix the bearing 42, prevent the eccentric component 20 and the image acquisition device 30 from detaching from the housing 41, and improve the stability of the product.

In this embodiment, the inner wall of the housing 41 is provided with a limiting protrusion 411, which is in contact with the bearing 42 to fix the bearing 42 between the limiting protrusion 411 and the first fixing member 43. By setting the above structure, the two ends of the bearing 42 are respectively in contact with the limiting protrusion 411 and the first fixing part 43, which can further fix the bearing 42, hinder its axial movement, and improve the stability of the product.

In this embodiment, a lighting device 80 is provided near the image acquisition window 12 of the shell 10, and the lighting device 80 is connected to the first control board 51 through a third electrical connection line 52. The lighting direction of the lighting device 80 matches the orientation of the image acquisition device 30. By setting the above structure, the lighting device 80 can provide illumination, making the images captured by the image acquisition device 30 clearer, allowing users to better understand the situation inside the pipeline, and more convenient to use. In addition, the lighting direction of the lighting device 80 matches the orientation of the image acquisition device 30, which can effectively illuminate the environment in front of the image acquisition device 30, improve the efficiency and clarity of image acquisition by the image acquisition device 30. The first control board 51 can control the lighting device 80 according to user instructions, such as turning on or off some of the light beads 81, or adjusting the brightness of the light beads 81. When the light inside the pipeline is insufficient, it can effectively supplement the lighting, and when the light inside the pipeline is sufficient, it can turn off some of the light beads, saving energy; at the same time, adjusting the light intensity can also change the ambient brightness, prevent excessive brightness from causing overexposure of the images captured by the image acquisition device 30, ensure the clarity of the images captured by the image acquisition device 30, and help users better understand the situation inside the pipeline.

In this embodiment, the lighting device 80 comprises multiple lamp beads 81, and the shell 10 is surrounded by a lamp bead groove 13 at the image acquisition window 12. The lamp beads 81 are arranged inside the lamp bead groove 13, and surround the image acquisition window 12, which can make the light around the image acquisition window 12 more uniform, thereby making the light in the environment in front of the image acquisition device 30 more uniform. The images captured by the image acquisition device 30 are clearer, preventing local light from being too dark or too bright and affecting the clarity of the images.

In this embodiment, the lighting device 80 further comprises a lampshade 82, which is connected to the shell 10 and covers the lamp bead groove 13 and the image acquisition window 12. The lampshade 82 can effectively isolate the lamp bead 81 and the image acquisition device 30 from the external environment, improve the sealing of the product, prevent debris in the pipeline from damaging the lamp bead 81 and the image acquisition device 30, and increase the service life of the product. Preferably, the lampshade 82 is made of transparent high-strength glass, plastic, or resin.

In this embodiment, the outer surface of the housing 41 is provided with a wiring groove 412, and the third electrical connection wire 52 passes through the wiring groove 412 and is accommodated between the wiring groove 412 and the inner wall of the shell 10. By setting the above structure, the wiring groove 412 can effectively accommodate the third electrical connection wire 52, ensuring the stability of the electrical connection between the first control board 51 and the lighting device 80; at the same time, it can also facilitate users to insert the housing 41 into the accommodating chamber 11, preventing the third electrical connection line 52 from obstructing the insertion of the housing 41 during assembly, and improving the assembly and production efficiency of the product.

In this embodiment, a second fixing member 60 is also included, which is connected to the inner wall of the accommodating chamber 11 and contacts the first control plate 51, so that the first control plate 51 is confined between the first fixing member 43 and the second fixing member 60. By setting the above structure, the second fixing member 60 and the first fixing member 43 fix the first control board 51, further improving the stability of the product and preventing the first control board 51 from moving inside the accommodating chamber 11. Preferably, the second fixing component 60 is connected to the inner wall of the accommodating chamber 11 through a threaded portion to enhance the stability of the connection.

In this embodiment, there is also a connecting handle 70, which has a first connecting end 71 and a second connecting end 72. The first connecting end 71 is connected to one end of the shell 10 away from the image acquisition device 30, and the second connecting end 72 is used to connect to connecting wire including the cable 18 of the detection system. The first connecting end 71 is connected to the end of the shell 10 that is far away from the image acquisition device 30, and can cover the accommodating chamber 11 to form a closed space, protecting the image acquisition device 30, the second control board 32, the first control board 51 and other components inside the accommodating chamber 11, preventing them from being contaminated by impurities in the pipeline, and improving the stability of the product. The second connecting end 72 is connected to the connecting wire, which can achieve the transmission of electrical signals. When the connecting wire is inserted into the pipeline, the pipeline endoscope probe can be inserted deeper into the pipeline with the connecting wire, which is convenient for users to use.

In this embodiment, the outer surface of the first connecting end 71 is provided with a first external thread 711, and the end of the accommodating chamber 11 away from the image acquisition device 30 is provided with a first internal thread 111. The first external thread 711 is threaded to the first internal thread 111. By setting the above structure, the first internal thread 111 and the first external thread 711 cooperate to effectively improve the stability of the connection between the first connecting end 71 and the shell 10, prevent the pipeline endoscope probe from detaching when penetrating deep into the pipeline, and effectively protect the user's property safety.

In this embodiment, a sealing ring 90 is further included, and the outer surface of the first connecting end 71 is also provided with a sealing groove 712. The sealing ring 90 is set inside the sealing groove 712. When the first external thread 711 is threaded to the first internal thread 111, the sealing ring 90 is in contact with the inner wall of the accommodating chamber 11 and the inner wall of the sealing groove 712. By setting the above structure, the sealing ring 90 can be in contact with the inner wall of the accommodating chamber 11 and the inner wall of the sealing groove 712, which can further enhance the sealing between the shell 10 and the first connecting end 71, preventing the components in the accommodating chamber from being contaminated by impurities in the pipeline.

In this embodiment, the connecting handle 70 includes a spring 73 located between the first connecting end 71 and the second connecting end 72, which is used to deform under the action of the inner wall of the pipeline. By setting the above structure, the endoscope probe of the pipeline can be inserted into the pipeline during use. Due to the complex environment inside the pipeline, the deformable spring 73 can enhance the adaptability of the product, and it can still be inserted along the pipeline in complex pipelines.

In this embodiment, the spring 73 gradually narrows from the first connecting end 71 to the second connecting end 72. By setting the above structure, the spring 73 is arranged in a conical shape, and the working performance of the conical spring 73 adapts to changes in load, effectively reducing the impact and vibration caused by load changes, improving the stability and reliability of the system, and effectively ensuring the stability of the images collected by the image acquisition device 30. Among them, the shell 10 is cylindrical with an outer diameter of 20mm-25mm and a length of 40mm-45mm, this size of shell 10 can adapt to smaller inner diameter sewers, at the same time, the length of the spring is 90mm-95mm, with the thicker end of the spring having a diameter of 18mm-22mm and the thinner end of the spring having a diameter of 15mm-17mm. Longer springs can adapt to narrower and more curved pipelines, and the spring can deform more easily and enter the pipeline more easily, making it convenient for users to use probes and effectively improving their user experience, and the length of the second connecting end is 28mm-32mm, which can facilitate users to connect the connecting wires and also extend into the pipeline together with the spring.

In this embodiment, the pipeline endoscope probe further includes a fourth electrical connection wire 54, which passes through the first connecting end 71 and the spring 73 and is connected to the second connecting end 72; the fourth electrical connection wire 54 passes through the middle of the first connecting end 71 and the spring 73 to ensure the stability of the electrical connection. The spring 73 and the first connecting end 71 can also provide protection for the fourth electrical connection wire 54, ensuring the stability of the product.

In this embodiment, the pipeline endoscope probe further includes a first connector 722 for fixedly connecting with the cable 18 of the detection system. The first connector 722 is detachably and electrically connected to the second connecting end 72, making it easier for users to connect the pipeline endoscope probe and detection system.

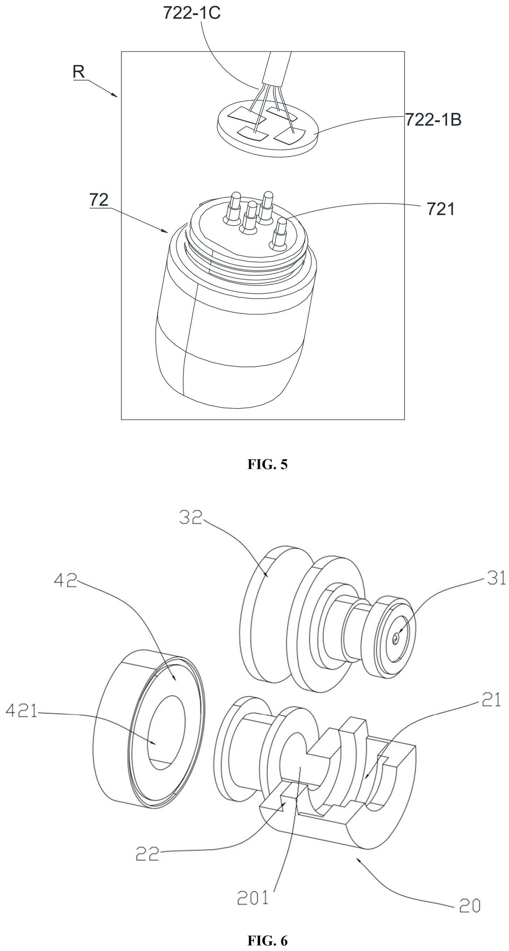

In this embodiment, the first connector 722 is structurally configured as follows: the first connector 722 includes a fixing cover 722-1A and a conductive plate 722-1B. The second connecting end 72 is provided with several elastic charging pins 721, and the conductive plate 722-1B is installed inside the fixing cover 722-1A. The cable 18 passes through the fixing cover 722-1A and is electrically connected to the conductive plate 722-1B. The fixing cover 722-1A can be detachably installed on the second connecting end 72, when the fixing cover 722-1A is installed on the second connecting end 72, the conductive plate 722-1B presses against the elastic charging pins 721. The arrangement of conductive plate 722-1B, fixing cover 722-1A, and elastic charging pin 721 is to facilitate the quick and convenient electrical connection between the pipeline endoscope probe and the detection system for users. The power connection method by the elastic charging pin 721 connected to the conductive plate 722-1B is more convenient for manufacturers to assemble, as well as for users to disassemble and replace these components, and it is also more secure. The setting of the fixing cover 722-1A makes it easier for users to electrically connect the conductive plate 722-1B with the elastic charging pin 721, this structure is very simple, and both the production cost and replacement cost are relatively low. The display can be electrically connected to the conductive plate 722-1B through wires, if there are four elastic charging pins 721, then the conductive plate 722-1B has four ring electrical contact areas on its side relative to the elastic charging pins 721, and the four ring electrical contact areas are not connected to each other, as shown in FIG. 2, the conductive plate 722-1B has the structure on its side relative to the elastic charging pins 721; and on its side away from the elastic charging pins 721, there are also four non connected electrical contact areas corresponding to the four ring electrical contact areas, as shown in FIG. 5, the conductive plate 722-1B has a structure on its side away from the elastic charging pins 721, which is used to connect with the four wires 722-1C respectively. A hole 722-1D can be made in the upper part of the fixing cover 722-1A for the passage of the four wires 722-1C. The hole 722-1D should be waterproof to prevent water from leaking into the fixing cover 722-1A and damaging the conductive plate 722-1B.

Furthermore, the conductive plate 722-1B includes a circuit substrate 722H, multiple first electrodes 722M arranged on the first surface of the circuit substrate 722H, and multiple second electrodes 722N arranged on the second surface of the circuit substrate 722H away from the first surface. The multiple first electrodes 722M are electrically connected to the multiple second electrodes 722N through the circuit substrate 722H. It can be understood that the multiple first electrodes 722M are used to correspond and electrically connect with the multiple elastic charging pins 721 one by one, and the multiple second electrodes 722N are electrically connected to multiple wires 722-1C one by one. The four wires 722-1C extend through openings 722-1D and can be connected to image receiving devices (such as display 15) through cables 18. As shown in figures 2 and 5, multiple first electrodes 722M are all annular electrodes, and they are arranged at intervals on the circuit substrate 722H. Multiple second electrodes 722N are dot shaped electrodes, respectively set on four different sides of the second surface.

It can be understood that due to the multiple first electrodes 722M being annular electrodes, even if the position of the elastic charging pin 721 changes due to connection or rotation, it can still maintain electrical contact with the annular electrodes, thereby improving the stability of the electrical connection between the two and enhancing product reliability.

Furthermore, the multiple second electrodes 722N on all four sides are point like electrode points, which also ensures that the lengths, impedances, and forces of the multiple wires 722-1C are basically the same. As a result, the transmission signals of the four wires 722-1C are relatively stable, improving the reliability of the product.

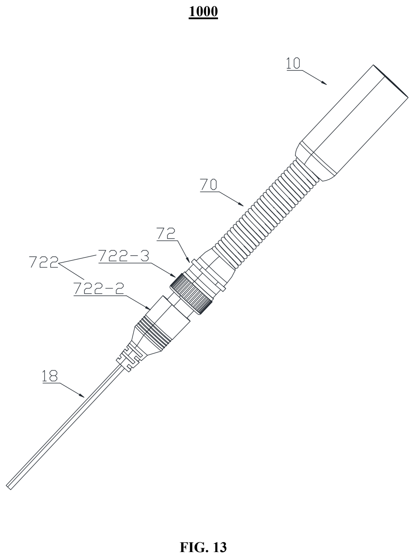

In this embodiment, an alternative implementation of the first connector 722 structure is shown in figure 13-15. The first connector 722 includes an electrical connector 722-2, and the second connecting end 72 is provided with an electrical pin 721-2. The electrical connector 722-2 has an electrical socket 7220, and the electrical pin 721-2 is inserted into the electrical socket 7220. The second connecting end 72 is electrically connected to the electrical connector 722-2, that is, using a plug-in method for electrical connection, which makes electrical connection more convenient and fast.

Furthermore, as shown in figures 13-15, in this embodiment, the first connector head further comprises a connection cover 722-3, which can be flexibly set on the electrical connector 722-2. The outer periphery of the electrical pin 721-2 has a surrounding wall 7210, and the outer surface of the surrounding wall 7210 of the electrical pin 721-2 is provided with a second external thread 7211. The inner wall surface of the connection cover 722-3 is provided with a second internal thread 72230. After the electrical pin 721-2 is inserted into the electrical socket 7220, the surrounding wall 7210 of the electrical pin 721-2 wraps around the outer side of the electrical connector 722-2, and the second connecting end 72 is fixedly installed on the electrical connector 722-2 through the connection of the second internal thread 72230 and the second external thread 7211. The connection cover 722-3 locks the second connecting end 72 and the electrical connector 722-2, achieving both waterproof and fastening functions, as well as facilitating disassembly and assembly, Simple structure saves costs and is easy for users to use.

In this embodiment, the rotatable component 402 includes a wire organizer 4021, and the fixing component 401 includes a wire harness 4011. The wire organizer 4021 is electrically connected to the wire harness 4011, and the wire organizer 4021 can rotate relative to the wire harness 4011. By setting the above structure, when in use, the wire organizer 4021 rotates relative to the wire harness 4011 while maintaining electrical connection with the wire harness 4011, avoiding entanglement between the second electrical connection wire 404 electrically connected to the wire organizer 4021 and the second electrical connection wire 404 electrically connected to the wire harness 4011 during rotation.

In this embodiment, the wire organizer 4021 includes multiple conductive rings 4022, and the wire harness 4011 includes multiple conductive tentacles 4012. The outer side of the conductive rings 4022 is in contact with the conductive tentacles 4012 to maintain electrical connection between the wire organizer 4021 and the wire harness 4011. By setting the above structure, when in use, the outer side of the conductive ring 4022 is concave inward, and the conductive tentacles 4012 have a certain elastic force, when the outer side of the conductive ring 4022 and the conductive tentacles 4012 are in contact, the outer side of the conductive ring 4022 and the conductive tentacles 4012 are grounded and stuck in the concave position on the outer side of the conductive ring 4022. The conductive tentacles 4012 undergo certain elastic deformation, so that the outer side of the conductive ring 4022 and the conductive tentacles 4012 have a certain degree of contact force at the contact point, so that the outer side of the conductive ring 4022 and the conductive tentacles 4012 can still maintain a contact state when they rotate relative to each other, thereby ensuring stability of electrical connection.

In this embodiment, the pipeline endoscope probe 1000 further comprises a fixing component 401, and the wire harness 4011 comprises a first wire harness unit 40111 and a second wire harness unit 40112; the conductive tentacles 4012 are arranged on the inner side of the first wire harness unit 40111 and the second wire harness unit 40112. The fixing component 401 is used to restrict the radial movement of the first wire harness unit 40111 and the second wire harness unit 40112, so that the outer side of the conductive ring 4022 and the conductive tentacles 4012 remain in contact. By setting up the above structure, when in use, the first wire harness unit 40111 and the second wire harness unit 40112 are engaged, and a portion of the shaft segment of the wire organizer 4021, including the conductive tentacle 4012, is wrapped around the inner side of the first wire harness unit 40111 and the second wire harness unit 40112, ensuring that the conductive tentacle 4012 is in contact with the outer side of the conductive ring 4022. In addition, because when the conductive tentacle 4012 is in contact with the outer side of the conductive ring 4022, there is an elastic force between the conductive tentacle 4012 and the outer side of the conductive ring 4022, which causes the first wire harness unit 40111 and the second wire harness unit 40112 that are engaged to have a radial separation tendency, therefore, the fixing component 40 is set up to limit the radial movement of the first wire harness unit 40111 and the second wire harness unit 40112 while neutralizing the elastic force received by the first wire harness unit 40111 and the second wire harness unit 40112, so that the conductive tentacle 4012 can stably maintain contact with the outer side of the conductive ring 4022, improve the stability of the electrical connection, and further enhance the connection. the user experience.

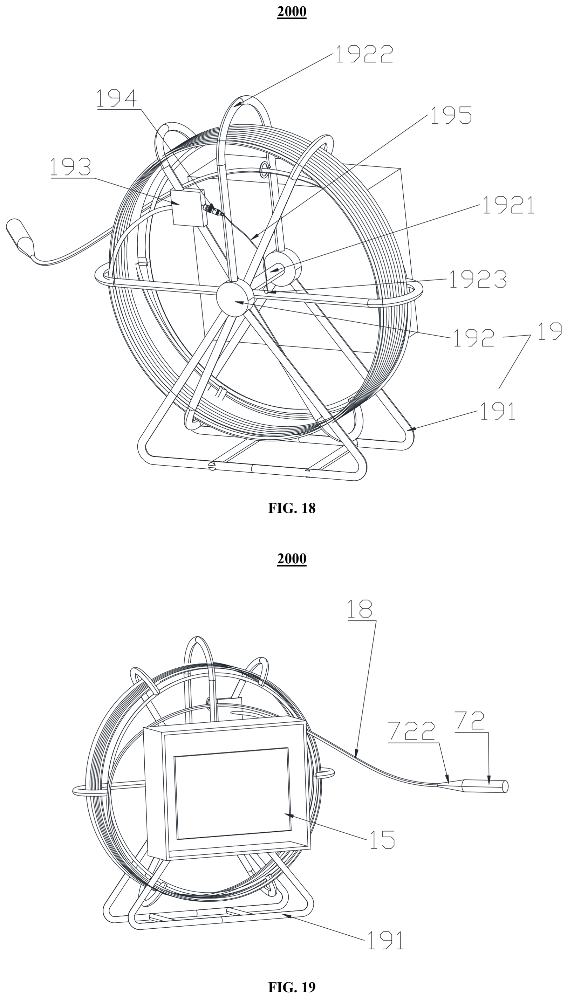

As shown in figures 18-19, this embodiment also includes a pipeline detection system for displaying the images detected by the pipeline endoscope probe 1000. The pipeline detection system includes a display 15 and a cable 18, the display is used for displaying the images detected by the pipeline endoscope probe 1000; one end of the cable 18 is electrically connected to the display 15, and the other end of the cable 18 is electrically connected to the first connector 722 of the pipeline endoscope probe, so as to electrically connect the cable 18 with the pipeline endoscope probe 1000 and transmit the detected image to the display 15. Person skilled in this field should understand that display 15 can be a display 15 dedicated to the detection system, and in some embodiments, the display 15 may also be other devices with display functionality, for example, display 15 can be a mobile terminal such as a phone, tablet, or computer device such as a laptop, desktop computer, etc. The cable 18 is configured to connect the pipeline endoscope probe 1000 and the display 15 together to transmit detection data to the display 15. In some embodiments, the cable 18 can also be configured to provide power to pipeline endoscope probe 1000.

In this embodiment, the pipeline detection system further includes a winding frame 19 for the cable 18 to be wound on the winding frame 19. The winding frame 19 includes a main support frame 191 and a rotating bracket 192, the rotating bracket 192 is rotatably installed on the main support frame 191, and the cable 18 is wound on the rotating bracket 192 to retract and retract the cable 18 by rotating the rotating bracket 192. The cable 18 can be wound on the winding frame 19 to retract and retract the cable 18 according to the operation needs of the pipeline endoscope probe 1000, thereby controlling the length of the released cable 18.

In this embodiment, the pipeline detection system further includes a signal connector 193, a second connector 194, and a fifth electrical connection line 195. The signal connector 193 is used to receive the signal emitted by the pipeline endoscope probe 1000, thereby determining the position of the pipeline endoscope probe 1000. The signal connector 193 can receive signals using methods such as WiFi, AM, FM, etc. This application does not limit it. The signal connector 193 is located on the rotating bracket 192, and one end of the fifth electrical connection line 195 is connected to the display, the other end of the fifth electrical connection line 195 is connected to the second connector 194, which can be detachably connected to the signal connector 193. The cable 18 is electrically connected to the signal connector 193. The detachable setting of the second connector 194 and the signal connector 193 facilitates the connection and disconnection of signals for users, meeting their signal needs, in case of unmeasurable situations, it is also convenient to cut off power to the pipeline endoscope probe 1000.

Furthermore, the rotating bracket 192 comprises a central beam 1921 and several frame beams 1922. Several frame beams 1922 are arranged around the central beam 1921, and the centers of the central beam 1921 and the frame beam 1922 are hollow. The central beam 1921 and the frame beam 1922 are interconnected, and a through hole 1923 is provided in the frame beam 1922, one end of the fifth electrical connection line 195, which is electrically connected to the display 15, passes through the through hole 1923 and passes through the interior of the frame beam 1922 and the central beam 1921 to connect to the display 15, in this way, the fifth electrical connection line 195 is equivalent to a hidden type, for the winding frame 19, the concealment of the line makes it more convenient to transport the winding rack 19, and it will not affect the cable laying during the cable laying process, making the overall detection system operate in an orderly manner without confusion.

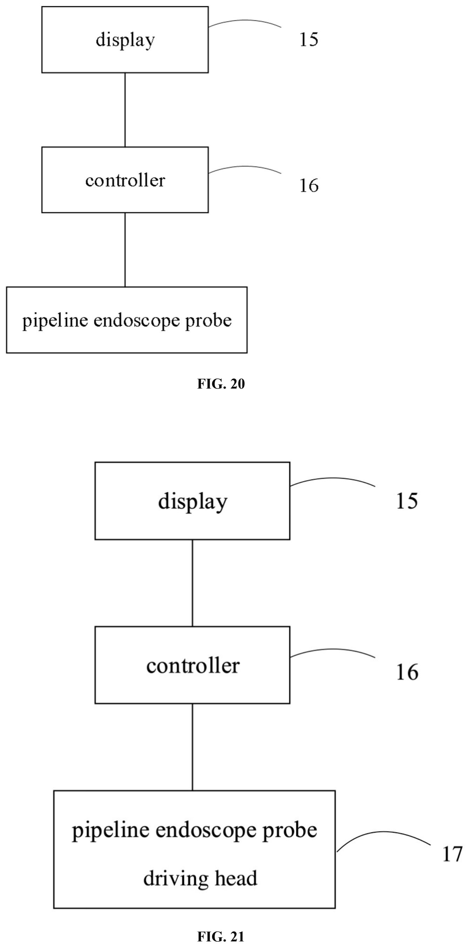

As shown in FIG. 20, a pipeline endoscope assembly provided by a first embodiment of the present invention includes a display 15 and a pipeline endoscope probe as shown in figures 1 to 17. The pipeline endoscope probe is connected in communication with the display 15 and is used to transmit image signals to the display 15. Specifically, the pipeline endoscope probe can be electrically connected to the display 15 through a flexible electrical connection cable, with its length generally set as needed, via the controller 16. The image signals collected and acquired by the pipeline endoscope probe are transmitted to the display 15 for image display through the controller 16. Due to the presence of the eccentric member 20, the pipeline endoscope probe always collects and acquires image signals in a forward direction, so that the display 15 displays images in an upright direction based on the image signals. It can be understood that the forward direction is a preset direction that is convenient for users to observe, such as the direction of gravity.

As shown in FIG. 21, a pipeline endoscope assembly provided by a second embodiment of the present invention provides a driving/adjusting device including a controller 16 and a driving head 17. The controller 16 is electrically connected to the first control board 51, and the driving head 17 is fixedly set on the image acquisition device 30 and electrically connected to the image acquisition device 30. The controller 16 is used to generate a driving signal, and the driving head 17 drives the image acquisition device 30 to rotate based on the driving signal. Based on the image acquired by the image acquisition device 30 displayed on the display 15, the controller 16 and the driving signal can ensure the image acquired by the image acquisition device 30 always maintain an upright direction. The driving head 17 is connected to the image acquisition device 30, and the controller 16 can allow the driving head 17 to drive the image acquisition device 30. The controller 16 includes a driving button and a driving device, that is, through the display 15, the user can press the driving button to control the driving head 17 to make the image acquisition device 30 in the forward direction for acquisition.

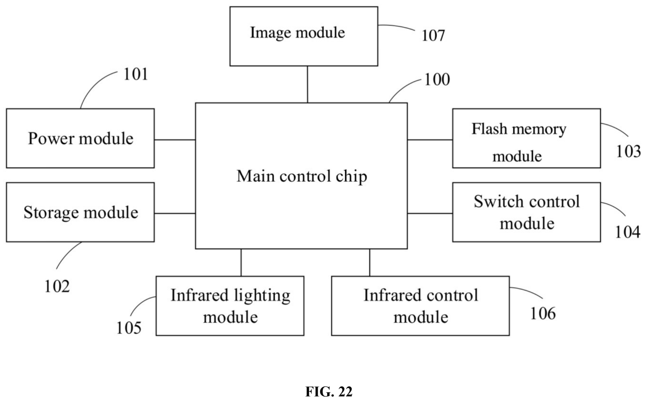

Please refer to figures 22-29. In the pipeline endoscope probe, the second control board 32 and the first control board 51 also constitute the control board module of the pipeline endoscope probe, which is used to communicate with external devices and transmit image signals to the external devices. As shown in FIG. 20, the control module may include a main control chip 100 and multiple functional modules electrically connected to the main control chip 100. The multiple functional modules include a power module 101, a storage module 102, a flash memory module 103, a switch control module 104, an infrared lighting module 105, an infrared control module 106, and an image module 107.

Specifically, the main control chip 100 and the multiple functional modules mentioned above can be separately installed on the second control board 32 and the first control board 51 as needed. In other embodiments, the second control board 32 and the first control board 51 can be combined into one, so that the main control chip 100 and the multiple functional modules can all be installed on it. In this embodiment, the storage module 102 can be set on the second control board 32, while other modules are set on the first control board 51.

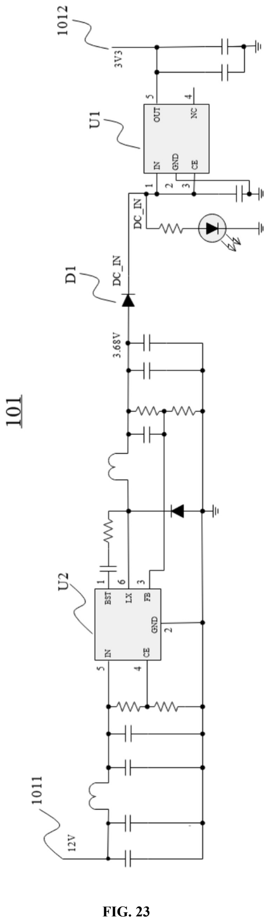

Please refer to FIG. 23, the power module 101 includes a main power chip U2, a voltage regulator chip U1, a power signal input terminal 1011, and a power signal output terminal 1012. The power signal input terminal 1011 is used to receive a first power supply voltage, and the main power chip U2 is used to control the conversion of the first power supply voltage into a conversion voltage. The conversion voltage is further processed into a stable second power supply voltage through a diode D1 and the voltage regulator chip U3, which is used to power the storage module 102, the flash memory module 103, the switch control module 104, etc.

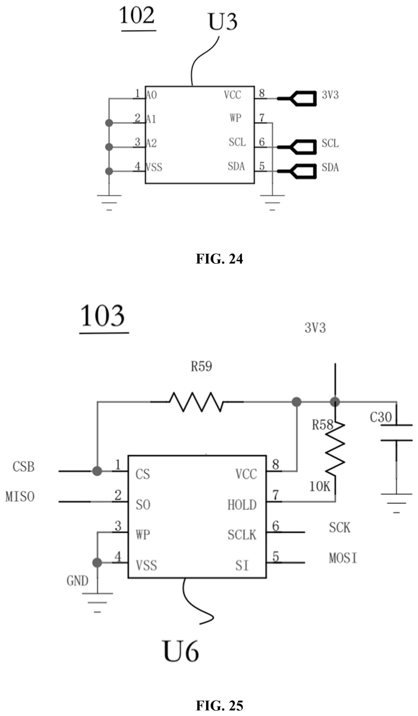

As shown in FIG. 24, the power pin VCC, clock signal pin SCL, and data pin SDA of the storage control chip U3 of the storage module 102 are all electrically connected to the main control chip U1. The storage module 102 is used to temporarily store the image signals collected by the lens 31.

As shown in FIG. 25, the sampling pin CSB, input pin MISO, output pin MOS1, and clock pin of the flash control chip U6 of the flash module 103 are all electrically connected to the main control chip. The flash memory module 103 is used for data storage during power outages.

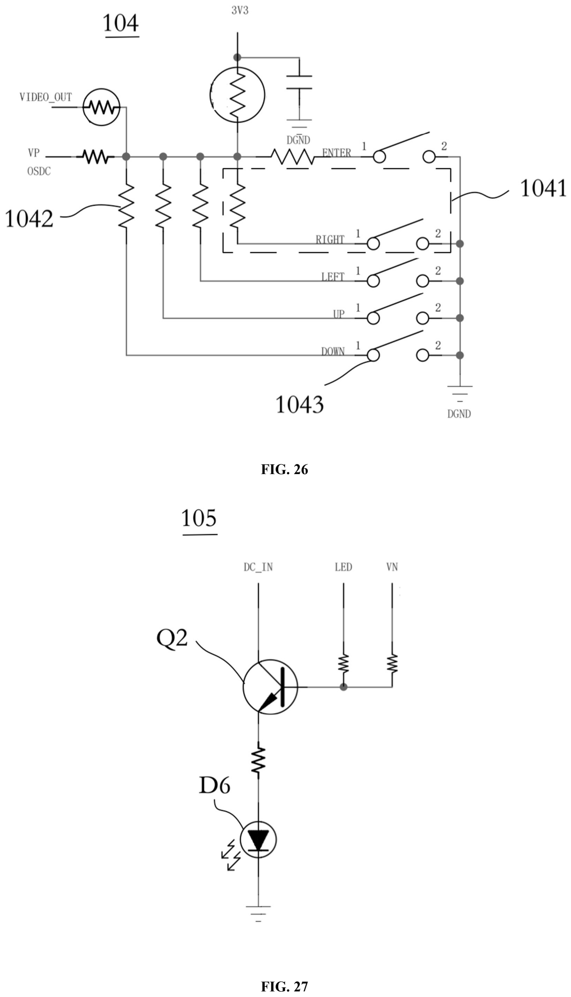

As shown in FIG. 26, the signal transmission terminal VP and the image output terminal VODEO OUT of the switch control module 104 are both electrically connected to the main control chip 100, and the signal transmission terminal VP and the image output terminal VODEO OUT are grounded through multiple switch branches 1041, each of which includes a series resistor 1042 and a control switch 1043. Each switch branch 1041 is used to control the opening or closing of switches, lighting, and other functions based on instructions generated for operation.

As shown in FIG. 27, the infrared lighting module 105 includes a transistor Q2 and a light-emitting element D6. The control terminal of the transistor Q2 is electrically connected to the main control chip 100, the first conducting terminal of the transistor Q2 is electrically connected to the power module 101, and the second conducting terminal of the transistor Q2 is grounded through the light-emitting element D6. The light emitting element D6 can be turned on under the control of the main control chip 100 to emit infrared light, enabling the lens 31 to achieve image acquisition in dark environments.

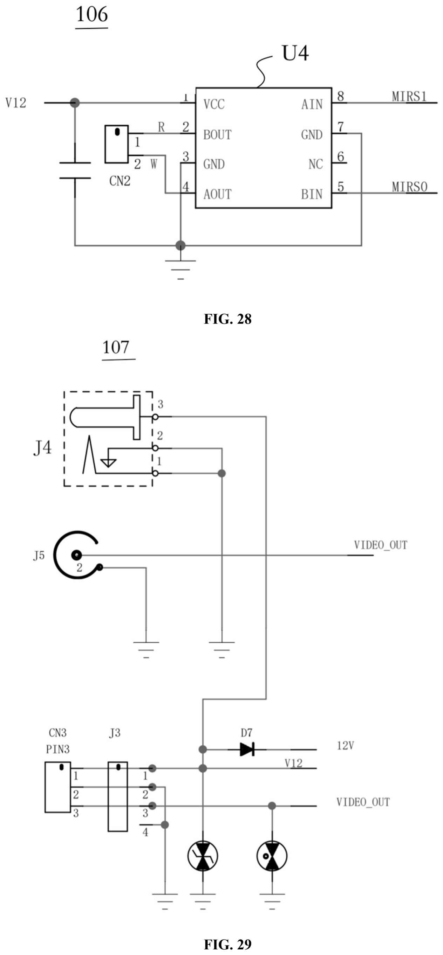

As shown in FIG. 28, the infrared control module 106 includes an infrared filtering control chip U4, which is an IR-CUT dual filter control chip used to control the operation of the infrared dual filter plate in the lens 31. Specifically, the infrared filter control chip U4 is used to control the infrared sensing point outside the lens 31 to detect changes in the strength of light, and then control the infrared dual filter plate in the lens 31 to automatically switch filters according to the strength of external light, so as to achieve the best image effect. That is to say, the infrared dual filter plate in lens 31 can automatically switch filters during day or night, so lens 31 can achieve the best imaging effect regardless of whether it is day or night.

As shown in FIG. 29, the image module 107 is electrically connected to the lens 31 and the main control chip 100, respectively.

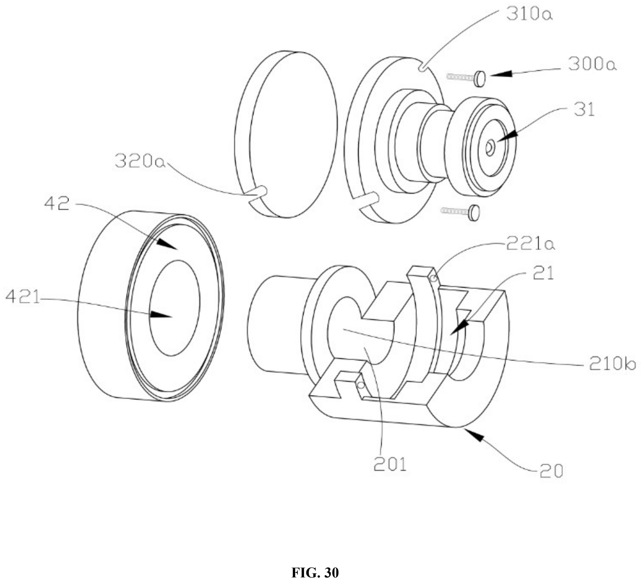

Please referring to FIG. 30, and also referring to FIG. 6, in one modified embodiment of FIG. 6, the lens 31 of the pipeline endoscopic probe is arranged in a stacked configuration with the second control board 32, specifically, the second control board 32 is positioned at the bottom of the lens 31 on the side opposite to the light entry; the connecting block 22 has first fixing portions 221a on both sides, while the second control board 32 has second fixing portions 320a on both sides; the lens 31 may have a third fixing portion 310a, the first fixing portion 221a, second fixing portion 320a, and third fixing portion 310a are positioned correspondingly and fixed together. Specifically, the first fixing portion 221a, second fixing portion 320a, and third fixing portion 310a can be fixed holes or fixed notches, a fastening component 300a (e.g., a screw) can be sequentially passed through the second fixing portion 320a, third fixing portion 310a, and the first fixing portion 221a (which can be a threaded hole) to secure the lens 31 and the second control board 32 to the eccentric member 20. Additionally, in another modified embodiment, the lens 31 can be fixed to the second control board 32 via adhesive or similar means, while the second control board 32 is connected to the first fixing portion 221a by passing a fastening component 300a through the second fixing portion 320a, thereby securing the lens 31 and the second control board 32 to the eccentric member 20. It should be noted that the opening 210b on the end of the eccentric member 20 opposite the lens 21 can also be equipped with the rotary electrical connector 40, the bearing 42 can be mounted on the end of the eccentric member 20 opposite the lens 21 and connected coaxially for rotation. The structural design of the eccentric member 20 is compact, highly integrated, and the portion for installing the second control board 32 and the lens 31 is roughly a semi-cylindrical structure, ensuring effective eccentricity.

The above descriptions are only preferred embodiments of the present disclosure, and are not intended to limit the patent scope of the present disclosure. Any equivalent structural transformation made by using the content of the specification and the drawings of the present disclosure under the invention idea of the present disclosure, directly or indirectly applied to other related technical fields, shall all be included in the scope of patent protection of the present disclosure.

## Claims

1. A pipeline endoscopic probe, comprising:
a shell (10) comprising an accommodating chamber (11) and an image acquisition window (12) in communication with the accommodating chamber (11);
an image acquisition device (30) positioned within the accommodating chamber (11) and oriented toward the image acquisition window (12);
a driving/adjusting device connected to the image acquisition device (30) and is used to adjust the image acquisition angle of the image acquisition device (30), ensuring that an image displayed on a display (15) connected to the image acquisition device (30) remains upright;
a first control board (51) fixedly installed inside the accommodating chamber (11); and
a rotating electrical connector (40) arranged inside the accommodating chamber (11), the rotating electrical connector (40) comprising a fixing component (401) and a rotatable component (402) electrically connected to the fixing component (401), the rotatable component (402) being rotatable relative to the fixing component (401); the image acquisition device (30) being electrically connected to the rotatable component (402) through a first electrical connection line (403), and the first control board (51) being electrically connected to the fixing component (401) through a second connection line (404); thereby when the driving/adjusting device rotates, the rotatable component (402) follows a rotation of the driving/adjusting device, and the fixing component (401) is capable of maintaining an original state relative to the rotatable component (402).

2. The pipeline endoscope probe according to claim 1, wherein the driving/adjusting device comprises an eccentric component (20) rotatably arranged in the accommodating chamber (11), the image acquisition device (30) is coaxially arranged with the eccentric component (20) and rotates around an axis of the image acquisition device (30) under an action of the eccentric component (20).

3. The pipeline endoscope probe according to claim 2, wherein the eccentric component (20) is equipped with a first mounting groove (21) and a second mounting groove (201), the first mounting groove (21) is located near the image acquisition window (12), and at least a portion of the image acquisition device (30) is inserted into the first mounting groove (21) to be coaxial with the eccentric component (20); the second mounting groove (201) is located away from the image acquisition window (12); the rotating electrical connector (40) is installed in the second mounting groove (201), and the eccentric component (20) is rotatable relative to the fixing component (401).

4. The pipeline endoscope probe according to claim 3, further comprising a housing (41) and a bearing (42), the housing (41) is arranged in the accommodating chamber (11), and the bearing (42) is fixed in the housing (41), the eccentric component (20) is rotatably arranged in a bearing hole (421) of the bearing (42).

5. The pipeline endoscope probe according to claim 4, wherein the eccentric component (20) comprises a connecting tube (210) and a mounting base (211), the connecting tube (210) is fixedly connected to the side of the mounting base (211) away from the image acquisition window (12), the first mounting groove (21) is formed on the mounting base (211), and the second mounting groove (201) is formed in a channel shape in the connecting tube (210);the connecting tube (210) is rotatably inserted into the bearing hole (421) of the bearing (42), and the rotating electrical connector (40) is installed in the second mounting groove (201); the two ends of the connecting tube (210) each are equipped with a limiting portion (2100) configured for preventing a movement of the bearing (42) towards the two ends of the connecting tube (210).

6. The pipeline endoscope probe according to claim 4, further comprising a first fixing member (43) connected to one end of the eccentric housing (41) near the bearing (42), wherein the first fixing member (43) is used to fix the bearing (42) inside the eccentric housing (41); the shell (10) is equipped with a lighting device (80) near the image acquisition window (12), and the lighting device (80) is connected to the first control board (51) through a third electrical connection line (52, and a lighting direction of the lighting device (80) matches an orientation of the image acquisition device (30).

7. The pipeline endoscope probe according to claim 1, further comprising a connecting handle (70), the connecting handle (70) having a first connecting end (71) and a second connecting end (72), wherein the first connecting end (71) is connected to one end of the shell (10) away from the image acquisition device (30), and the second connecting end (72) is used to connect to a cable (18) of the detection system; wherein an outer surface of the first connecting end (71) is provided with a first external thread (711), and an end of the receiving chamber (11) away from the image acquisition device (30) is provided with a first internal thread (111), the first external thread (711) is threaded to the first internal thread (111); and
wherein an outer surface of the first connecting end (71) is further provided with a sealing groove (712), and a sealing ring (90) is disposed inside the sealing groove (712), when the first external thread (711) is threaded to the internal thread (111), the sealing ring (90) is in contact with an inner wall of the receiving chamber (11) and an inner wall of the sealing groove (712).

8. The pipeline endoscope probe according to claim 7, wherein the connecting handle (70) comprises a spring (73) located between the first connecting end (71) and the second connecting end (72), wherein the spring (73) is used to deform under the action of the inner wall of the pipeline, and the spring (73) gradually narrows from the first connecting end (71) to the second connecting end (72); the pipeline endoscope probe further comprises a fourth electrical connection wire (54), the fourth electrical connection wire (54) passes through the first connecting end (71) and the spring (73), and is connected to the second connecting end (72).

9. The pipeline endoscope probe according to claim 7, further comprising a first connector (722) for fixedly connecting with the cable (18) of the detection system, wherein the first connector (722) is detachably electrically connected to the second connecting end (72).

10. The pipeline endoscope probe according to claim 9, wherein the first connector (722) comprises a fixing cover (722-1A) and a conductive plate (722-1B), the second connecting end (72) is provided with a plurality of elastic charging pins (721), and the conductive plate (722-1B) is installed inside the fixing cover (722-1A), the cable (18) passes through the fixing cover (722-1A) and is electrically connected to the conductive plate (722-1B), the fixing cover (722-1A) is detachably installed on the second connecting end (72), when the fixing cover (722-1A) is installed on the second connecting end (72), the conductive plate (722-1B) presses against the elastic charging pin (721).

11. The pipeline endoscope probe according to claim 9, wherein the first connector (722) comprises an electrical connector (722-2), and an electrical pin (721-2) is provided on the second connecting end (72), the electrical connector (722-2) has an electrical socket (7220), and the electrical pin (721-2) is inserted into the electrical socket (7220), the second connecting end (72) is electrically connected to the electrical connector (722-2).

12. The pipeline endoscope probe according to claim 11, wherein the first connector (722) further comprises a connecting cover (722-3) movably arranged on the electrical connector (722-2), a periphery of the electrical pin (721-2) has a surrounding wall (7210), and an outer surface of the surrounding wall (7210) of the electrical pin (721-2) is provided with a second external thread (7211), an inner wall surface of the connecting cover (722-3) is provided with a second internal thread (72230), after the electrical pin (721-2) is inserted into the electrical socket (7220), the surrounding wall (7210) of the electrical pin (721-2) wraps around the electrical connector. (722-2), the second connecting end (72) is fixedly installed on the electrical connector (722-2) through a connection of the second internal thread (72230) and the second external thread (7211).

13. The pipeline endoscope probe according to claim 1, wherein the rotatable component (402) comprises a wire organizer (4021), and the fixing component (401) comprises a wire harness (4011), the wire organizer (4021) is electrically connected to the wire harness (4011), and the wire organizer (4021) is capable of rotating relative to the wire harness (4011); the wire organizer (4021) comprises a plurality of conductive rings (4022), and the wire harness (4011) comprises a plurality of conductive tentacles (4012), an outer side of the conductive rings (4022) is in contact with the conductive tentacles (4012) to maintain electrical connection between the wire organizer (4021) and the wire harness (4011).

14. The pipeline endoscope probe according to claim 1, wherein the driving/adjusting device comprises a controller (16) and a driving head (17), the controller (16) is electrically connected to the first control board (51), and the driving head (17) is fixedly and electrically connected to the image acquisition device (30),the controller (16) is used to generate a driving signal, the driving head (17) drives the image acquisition device (30) to rotate based on the driving signal, thereby the image acquired by the image acquisition device (30) maintains at an upright direction to display on thedisplay (15).

15. A pipeline detection system, comprising:
a display (15) for displaying an image detected by a pipeline endoscope probe (1000); and
a cable (18), wherein one end of the cable (18) is electrically connected to the display (15), and the other end of the cable (18) is electrically connected to a first connector (722) of the pipeline endoscope probe (1000), thereby the cable (18) is electrically connected with the pipeline endoscope probe (1000) and capable of transmitting the detected image to the display (15), and the image displayed on the display (15) remains upright during detection through the pipeline endoscope probe (1000).
